# EUROPEAN PATENT SPECIFICATION

(11) **EP 0 811 345 B1**
(45) Date of publication and mention of the grant of the patent: **28.11.2001**
(21) Application number: 97201698.4
(22) Date of filing: 04.06.1997
(51) Int. Cl.: A47J 31/56

(54) **Apparatus for delivering hot water**
Heisswasserspender
Distributeur d'eau chaude

(30) Priority: 05.06.1996 NL 1003276
(43) Date of publication of application: 10.12.1997
(73) Proprietor: Bravilor Holding B.V., 1700 AD Heerhugowaard (NL)
(72) Inventor: Verhoeven, Romanus Eduard, 1187 JZ Amstelveen (NL); Van Eijnatten, Eric Michael Cornelis Maria, 1713 SN Obdam (NL)
(74) Representative: de Bruijn, Leendert C.

(56) References cited:
- GB-A- 2 064 078
- US-A- 3 589 271
- US-A- 3 793 934
- US-A- 4 094 233
- US-A- 4 222 320
- US-A- 4 793 513
- PATENT ABSTRACTS OF JAPAN vol. 18, no. 451 (C-1241), 23 August 1994 & JP 06 141976 A (SANYO ELECTRIC CO LTD), 24 May 1994,

## Description

The invention relates to an apparatus for supplying hot water comprising:
- a hot water reservoir comprising a thermostatically controlled heating unit to maintain water in the reservoir at a desired temperature,
- a cold water reservoir above the hot water reservoir in which an amount of cold water can be received,
- a connecting conduit between the lower part of the cold water reservoir and the lower part of the hot water reservoir,
- a siphon through which hot water from the hot water reservoir can be delivered.
- a controlled valve, through which cold water can be filled in the cold water reservoir, and selection means for selecting the amount of hot water to be delivered.

Apparatuses of this type are known from the prior art in various embodiments. In a pure manually operated embodiment a measured amount of cold water is poured into the cold water reservoir. The water flows through the communication conduit to the lower part of the hot water reservoir and creates therefore an upwards movement of the hot water in the reservoir. As a result thereof hot water will be delivered through the siphon. In principle the amount of hot water delivered through said siphon equals the amount of cold water which is poured into the cold water reservoir.

If in such a simple apparatus electrically operated water valves, level sensors etc. are applied to automate the dosing process, then in general one has the disadvantage that at least a part of these components has to be installed within the hot section of the apparatus. Because of the almost unavoidable deposit of scale, the temperature and the intensive contact with hot water and water vapour to which the components should be resistant, especially these components are forming a source of disturbances or breakdown. An apparatus having sensitive components installed in the cold section of the apparatus is disclosed in US-A-3 589 271.

An aim of the invention is now to decrease the number of disturbances by embodying the system such that eventual fault sensitive components are installed in the cold section of the apparatus.

In agreement with said object the invention has described in the first paragraph has the characteristic of
- the cold water reservoir comprises a level electrode supplying a signal as soon as the water in the cold water reservoir reaches a detection level above the lower end of the siphon but underneath the upper side of the siphon,
- the apparatus comprises a processor which
   - at the beginning of a delivery period opens said valve
   - receives a signal of said level electrode and in response thereof starts measuring a volume,
   - as soon as the volume measurement has reached a value which has a predetermined relation with the amount, selected by the selection means, closes said valve.

This apparatus comprises one single level electrode which is installed in the cold water reservoir and comprises furthermore one single controlled valve which is installed in the cold water conduit.

In general the hot water reservoir will have a volume which is sufficient to be able to deliver a certain maximum desired amount of hot water in one go. Should the apparatus be able to deliver relatively small amounts of hot water, for instance a cup at a time, then it is not inconceivable that the level of the underside of the siphon and the level of the upper side of the siphon are approaching each other very closely, which could cause problems. To avoid said problems, it is according to a special embodiment preferred that the hot water reservoir comprises above the heating unit a section with relatively small cross-section whereby the siphon is positioned within this section.

Another possibility to avoid the indicated problem is to embody the apparatus such that the apparatus furthermore comprises a siphon reservoir in which the siphon is positioned, whereby the lower part of the siphon reservoir is connected through a conduit to the upper side of the hot water reservoir.

To avoid a premature stop of the siphon operation it is in all cases preferable that the flow velocity through the siphon is smaller than the flow velocity through said valve.

The invention will be explained in more details with reference to attached drawings.

Figure 1 illustrates a first embodiment of an apparatus according to the invention.

Figure 2 illustrates a second embodiment of an apparatus according to the invention, whereby the upper section of the hot water reservoir has a relatively small diameter.

Figure 3 illustrates a third embodiment of an apparatus according to the invention comprising a separate reservoir for installing the siphon.

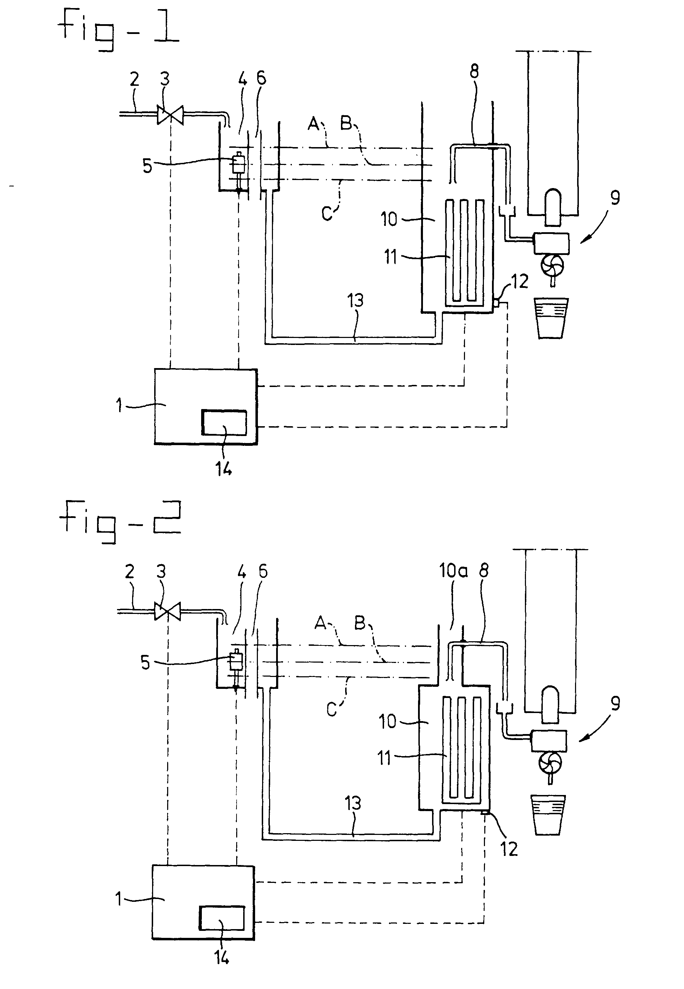

Figures 1 illustrates a first embodiment of an apparatus according to the invention. This apparatus comprises a cold water reservoir 4, in which cold water can be introduced through a controlled valve 3 from the cold water conduit 2. The cold water reservoir 4 comprises an overflow pipe 6 to remove a surplus of cold water in case of eventual disasters and comprises furthermore a level sensor 5 in the form of a floating body. The function of this level sensor will be discussed in detail furtheron.

The underside of the cold water reservoir 4 is through a conduit 13 connected to the underside of a hot water reservoir 10. A heater unit 11 is installed inside the hot water reservoir 10. At the outside of the hot water reservoir 10 a thermostat 12 is installed which together with a control circuit inside a processor 1, takes care of such a control of the heating unit 11, that the water in the reservoir 10 is maintained at a desired temperature.

In the upper section of the hot water reservoir 10 a siphon 8 is installed through which hot water can be delivered out of the reservoir 10, for instance into a device, which in general bears the reference 9, in which hot water for instance is mixed with flavours etc. to prepare therewith a hot instant drink. The type and embodiment of this device 9 are of no importance for the description of the invention.

In the static situation the water level equals the level C indicated in fig. 1, i.e. a level directly underneath the inflow-opening of the siphon 8. The processor 1 comprises selection means 14 through which the user may select a desired amount of water, for instance one cup, two cups etc. As soon as the desired amount of hot water is selected by said means 14, the delivery process is started and first of all the processor will open the valve 3 to let cold water from the conduit 2 flow into the cold water reservoir 4. As a result thereof, the water level in the apparatus will rise from the level C (both in the cold water reservoir 4 as well as in the hot water reservoir 10) until level B is reached. At that moment the level detector 5 reacts and supplies a signal to the processor 1. The processor 1 responds by starting a volume measurement which will be discussed hereafter. The supply of cold water from the water conduit 2 through the valve 3 into the reservoir 4 still continues.

As soon as the water level in the apparatus has reached level A the siphon 8 will start operating. Through the siphon 8 hot water is delivered from the reservoir 10 to the not further specified device 9, or for instance to a hot water tumbler or another receiving reservoir.

As soon as the volume measurement has reached a predetermined value, which in a predetermined manner is related to the momentaneous setting of the selection means, the valve 3 is closed. The water level in the apparatus will thereafter gradually fall unto the level C is reached and the lower end of the siphon looses contact with the water level. The siphon operation stops and the apparatus reaches in steady state.

To enable a relatively simple volume measurement the valve 3 is preferably of such a type that the flowthrough velocity through the valve 3 is independent of the pressure in the water conduit 2, so that a constant rate is delivered at the output. In that case the processor has to perform a time measurement to know which volume of cold water has flown through the valve after the signal of the level detector.

Instead thereof also a specific flowmeter may be installed in the water conduit 2 (before or after the valve 3) for directly measuring the volume and for delivering corresponding signals to the processor.

In another embodiment a second level detector is applied in the cold water reservoir 4. The solution with two electrodes, or a flowmeter or a time measurement for determining the delivered volume is assumed within reach of the expert in this field and therefore further discussion thereof is considered superfluous.

In all case it is preferred that the flowthrough velocity through the valve 3 is somewhat larger than the flowthrough velocity through the siphon 8, so that a continuous flow through the siphon 8 is assured.

All fault sensitive components in the apparatus according to fig. 1 are installed in the cold section of the apparatus. Involved are the illustrated embodiment the valve 3 and the level detector 5. If in agreement with the above paragraphs further or different fault sensitive components are used such as a separate flowmeter or a further level detector then also these components will be installed in the cold section of the apparatus.

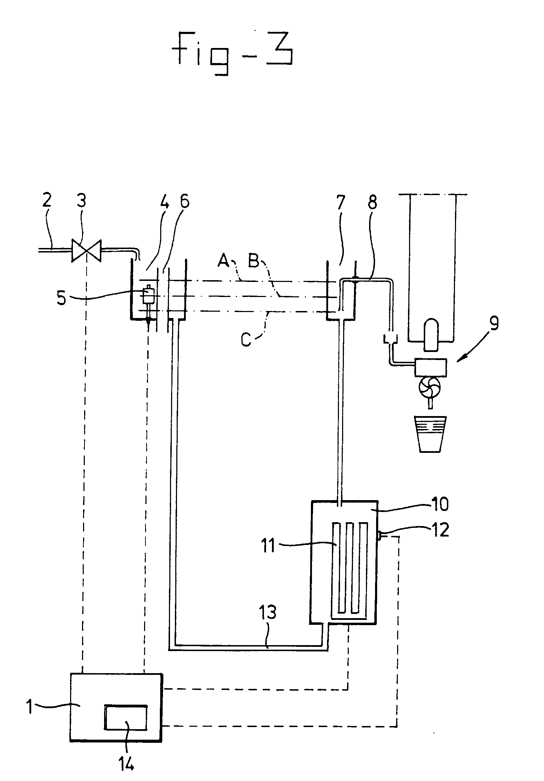

In general the hot water reservoir 10 will have a volume which is in any case suitable to be able to deliver a predetermined maximum amount of hot water in one go. If this maximum amount is relatively large then it might be desirable to be able to deliver a relatively small amount of water, for instance one cup, and in that case the levels A, B and C might approach each other relatively tight, which can cause problems. To avoid these problems it is preferred in a special embodiment that the upper part of the reservoir 10 is embodied with a smaller diameter, so that locally the rise and fall of the level will take place faster and therefore the distances between the levels A, B and C are larger. Such an embodiment is schematically illustrated in fig. 2. In this figure the upper part of the hot water reservoir as indicated by 10A has a significantly smaller diameter than the remaining part of this reservoir. In this narrow section 10A the siphon 8 is installed. Apart from the differences this apparatus operates completely identical as is described for the apparatus illustrated in fig. 1.

Another possibility to solve the indicated problem lies in the use of a separate siphon reservoir, as illustrated in fig. 3. In the embodiment of fig. 3 a separate siphon reservoir is installed above the hot water reservoir 10 and in that reservoir a siphon 8 is installed. That siphon reservoir 7 has a restricted diameter so that the levels A, B and C have a clearly distinguished mutual distance, so that the indicated problems are eliminated. Also in this case the operation of the apparatus as a whole is furthermore identical to the operation described for the system illustrated in fig. 1.

## Claims

1. An apparatus for supplying hot water comprising:
- a hot water reservoir (10) comprising a thermostatically controlled heating unit (11) to maintain water in the reservoir (10) at a desired temperature,
- a cold water reservoir (4) above the hot water reservoir (10) in which an amount of cold water be received,
- a connecting conduit (13) between the lower part of the cold water reservoir (4) and the lower part of the hot water reservoir (10),
- a siphon (8) through which hot water from the hot water reservoir (10) can be delivered,
- a controlled valve (3), through which cold water can be filled in the cold water reservoir (4), and
- selection means (14) for selecting the amount of hot water to be supplied ;
**characterized in that**
- the cold water reservoir (4) comprises a level electrode (5) supplying a signal as soon as the water in the cold water reservoir (4) reaches a detection level above the lower end of the siphon (8) but underneath the upper side of the siphon (8), and **in that** the apparatus comprises a processor (1) which carries out the following:
- at the beginning of a delivery period opens said valve (3)
- receives a signal of said level electrode (5) and in response thereof starts measuring a volume,
- as soon as the volume measurement has reached a value which has a predetermined relation with the amount selected by the selection means (14), closes said valve (3).

2. An apparatus according to claim 1, **characterized in that** the hot water reservoir (10) comprises above the heating unit (11) a section (10A) with relatively small cross-section whereby the siphon (8) is positioned within this section (10A).

3. An apparatus according to claim 1, **characterized in that** the apparatus further comprises a siphon reservoir (7) in which the siphon (8) is positioned, whereby the lower part of the siphon reservoir (7) is connected through a conduit to the upper side of the hot water reservoir (10).

4. Apparatus according to one of the preceding claims, **characterized in that** the flow velocity through the siphon (8) is smaller than the flow velocity through said valve (3).

## Patentansprüche

1. Vorrichtung zur Zuführung von heißem Wasser, die umfaßt:
- einen Warmwasserbehälter (10), der enthält: eine thermostatisch gesteuerte Heizeinheit (11), um das Wasser in dem Behälter (10) auf einer gewünschten Temperatur zu halten,
- einen Kaltwasserbehälter (4) über dem Warmwasserbehälter (10), der eine Menge an kaltem Wasser aufnehmen kann,
- eine Verbindungsleitung zwischen dem unteren Teil des Kaltwasserbehälters (4) und dem unteren Teil des Warmwasserbehälters (10),
- einen Siphon (8), durch den das warme Wasser aus dem Warmwasserbehälter (10) zugeführt werden kann,
- ein Regelventil (9) durch das das kalte Wasser in den Kaltwasserbehälter (4) gefüllt werden kann, und
- eine Wähleinrichtung (14) zur Wahl der Menge an zuzuführendem warmem Wasser,
**dadurch gekennzeichnet, daß**
- der Kaltwasserbehälter (4) eine Pegelelektrode (5) umfaßt, die ein Signal liefert, sobald das Wasser im Kaltwasserbehälter (4) einen Erfassungspegel über dem unteren Ende, aber unterhalb der Oberseite des Siphons (8) erreicht, und daß
- die Vorrichtung einen Prozessor (1) umfaßt, der folgende Schritte ausführt:
- Öffnen des Ventils (3) am Beginn eines Zuführzeitraums,
- Empfangen eines Signals der Pegelelektrode (5) und als Antwort darauf, Beginn der Messung eines Volumens, und
- Schließen des Ventils (3), nachdem die Volumenmessung einen Wert erreicht hat, der zum von der Wähleinrichtung (14) gewählten Betrag eine vorgegebene Beziehung aufweist.

2. Vorrichtung nach Anspruch 1, **dadurch gekennzeichnet, daß** der Warmwasserbehälter (10) über der Heizeinheit (11) einen Abschnitt (10A) mit einem relativ kleinen Querschnitt aufweist und der Siphon (8) innerhalb dieses Abschnitts (10A) angeordnet ist.

3. Vorrichtung nach Anspruch 1, **dadurch gekennzeichnet, daß** sie ferner umfaßt:
einen Siphonbehälter (7), in dem der Siphon (8) angeordnet ist, und der untere Teil des Siphonbehälters (7) über eine Leitung mit dem oberen Teil des Warmwasserbehälters (10) verbunden ist.

4. Vorrichtung nach einem der vorhergehenden Ansprüche, **dadurch gekennzeichnet, daß** die Strömungsgeschwindigkeit durch den Siphon (8) kleiner als die Strömungsgeschwindigkeit durch das Ventil (3) ist.

## Revendications

1. Distributeur d'eau chaude comprenant :
. un réservoir d'eau chaude (10) comprenant une unité de chauffe (11) commandée par thermostat pour maintenir l'eau dans le réservoir (10) à une température souhaitée,
. un réservoir d'eau froide (4) au-dessus du réservoir d'eau chaude (10) dans lequel une certaine quantité d'eau peut être reçue,
. un conduit de liaison (13) entre la partie inférieure du réservoir d'eau froide (4) et la partie inférieure du réservoir d'eau chaude (10),
. un siphon (8) à travers lequel l'eau chaude provenant du réservoir d'eau chaude (10) peut être délivrée,
. une soupape de commande (3) à travers laquelle de l'eau froide peut être admise dans le réservoir d'eau froide (4), et
. un moyen de sélection (14) pour choisir la quantité d'eau chaude à obtenir ;
**caractérisé en ce que** le réservoir d'eau froide (4) comporte une électrode de niveau (5) fournissant un signal dès que l'eau dans le réservoir d'eau froide (4) atteint un niveau de détection situé au-dessus de l'extrémité inférieure du siphon (8) mais en dessous du côté supérieur du siphon (8), et **en ce que** le distributeur comprend un processeur (1) qui met en oeuvre les opérations suivantes :
. ouverture de la soupape (3) au début d'une période de délivrance,
. réception d'un signal de l'électrode de niveau (5) et, en réponse à celle-ci, début de la mesure d'un volume, et
. fermeture de la soupape (3) dès que la mesure de volume a atteint une valeur qui présente une relation prédéfinie avec la quantité choisie par le moyen de sélection (14), fermeture de la soupape (3).

2. Distributeur selon la revendication 1, **caractérisé en ce que** le réservoir d'eau chaude (10) comprend une partie (10A) à section transversale relativement petite située au-dessus de l'unité de chauffe (11) par laquelle le siphon (8) est positionné dans cette partie (10A).

3. Distributeur selon la revendication 1, **caractérisé en ce qu'**il comprend en outre un réservoir de siphon (7) dans lequel le siphon (8) est positionné, et par lequel la partie inférieure du réservoir de siphon (7) est reliée à travers un conduit au côté supérieur du réservoir d'eau chaude (10).

4. Distributeur selon l'une quelconque des revendications précédentes, **caractérisé en ce que** la vitesse d'écoulement à travers le siphon (8) est inférieure à la vitesse d'écoulement à travers la soupape (3).
